# EUROPEAN PATENT APPLICATION

(11) **EP 4 489 269 A1**
(43) Date of publication of application: **08.01.2025**
(21) Application number: 23902155.3
(22) Date of filing: 21.08.2023
(51) Int. Cl.: H02K 5/24, F24F 1/0007, F24F 1/0003, F24F 13/00, H02K 5/00

(54) **MOTOR MOUNTING STRUCTURE, AIR CONDITIONER INDOOR UNIT, AND AIR CONDITIONER**

(30) Priority: 12.12.2022 CN 202223357451 U; 12.12.2022 CN 202223357659 U
(71) Applicant: GD Midea Heating & Ventilating Equipment Co., Ltd., Foshan, Guangdong 528311 (CN); Hefei Midea Heating & Ventilating Equipment Co., Ltd., Hefei, Anhui 230601 (CN)
(72) Inventor: TANG, Changqing, Foshan, Guangdong 528311 (CN); LI, Yunzhi, Foshan, Guangdong 528311 (CN); KAN, Changli, Foshan, Guangdong 528311 (CN); GU, Yong, Foshan, Guangdong 528311 (CN); GE, Shanshan, Foshan, Guangdong 528311 (CN); ZHOU, Baisong, Foshan, Guangdong 528311 (CN); ZHU, Menghao, Foshan, Guangdong 528311 (CN); MA, Mingtao, Foshan, Guangdong 528311 (CN); WEN, Lichao, Foshan, Guangdong 528311 (CN); WU, Lin, Foshan, Guangdong 528311 (CN); FENG, Zhengbo, Foshan, Guangdong 528311 (CN); YAO, Xiao, Foshan, Guangdong 528311 (CN); SHI, Danmei, Foshan, Guangdong 528311 (CN)
(74) Representative: RGTH
(86) International application number: PCT/CN2023/114019
(87) International publication number: WO 2024/124946

(57) **Abstract**

Provided are a motor mounting structure, an air conditioner indoor unit, and an air conditioner. The motor mounting structure includes: a motor; a first support portion disposed at the motor and adapted to be fixed; and a second support portion disposed at the motor and adapted to be fixed. The second support portion is different from the first support portion. By disposing the first support portion and the second support portion at the motor, and the first support portion being different from the second support portion, two mounting methods of the motor are thus realized. When applied to a specific air conditioner indoor unit, a suitable mounting method can be selected based on a form of the air conditioner indoor unit, greatly improving versatility of motor mounting and thus reducing a cost.

## Description

### CROSS-REFERENCE TO RELATED APPLICATIONS

This application claims priorities to Chinese patent application No. 202223357451. X, titled "MOTOR MOUNTING STRUCTURE, AIR CONDITIONER INDOOR UNIT, AND AIR CONDITIONER", filed with China National Intellectual Property Administration on December 12, 2022, and Chinese patent application No. 202223357659.1, titled "MOTOR MOUNTING STRUCTURE, AIR CONDITIONER INDOOR UNIT, AND AIR CONDITIONER", filed with China National Intellectual Property Administration on December 12, 2022, the entire contents of which are incorporated herein by reference.

### FIELD

The present disclosure relates to the field of air conditioner indoor unit technologies, and more particularly, to a motor mounting structure, an air conditioner indoor unit, and an air conditioner.

### BACKGROUND

In an air conditioner indoor unit, it is necessary to mount a motor to drive a fan wheel to rotate. Products in different regions have different product forms. Mounting methods of motors in different products are also different. Often, a mounting method for the motor is designed for a single product, resulting in a high cost.

### SUMMARY

The present disclosure aims to solve one of the technical problems in the related art to at least some extent. To this end, the present disclosure provides a motor mounting structure, which is capable of greatly improving versatility and flexibility of mounting the motor.

To achieve the above objective, the present disclosure relates to the motor mounting structure. The motor mounting structure comprises: a motor; a first support portion disposed at the motor and adapted to be fixed; and a second support portion disposed at the motor and adapted to be fixed. The second support portion is different from the first support portion.

In some embodiments of the present disclosure, the motor comprises a motor body and a rotation shaft. The motor body has an end surface and a circumferential surface. The first support portion is disposed at the end surface, and the second support portion is disposed at the circumferential surface. The rotation shaft extends beyond the end surface, and the rotation shaft is surrounded by the circumferential surface.

In some embodiments of the present disclosure, the rotation shaft is surrounded by the first support portion.

In some embodiments of the present disclosure, the motor body comprises a cover having the end surface. The cover and the first support portion are integrally formed. The first support portion is configured for mounting of a resilient member and a fastening ring. The resilient member is arranged around the first support portion. The fastening ring is fixed around the resilient member.

In some embodiments of the present disclosure, one of the first support portion and the resilient member is provided with a protrusion, and another one of the first support portion and the resilient member has a recess. The protrusion is inserted into the recess to prevent the resilient member from rotating relative to the first support portion.

In some embodiments of the present disclosure, the motor mounting structure further comprises a fixation plate abutted with the resilient member; and a first fastener penetrating the fixation plate and connected to the first support portion.

In some embodiments of the present disclosure, the second support portion is disposed at each of two sides of the rotation shaft.

In some embodiments of the present disclosure, the second support portion extends in an axial direction of the motor body.

In some embodiments of the present disclosure, the second support portion has a clamping slot adapted to be connected to a support leg by a second fastener.

The second fastener comprises a second bolt and a second nut. The second bolt having a head engaged into the clamping slot and a rod of the second bolt extending out of the clamping slot to penetrate the support leg. The second nut is screwed to the rod to fasten the support leg.

In some embodiments of the present disclosure, the second support portion is connected to a support leg.

The motor mounting structure comprises: a support, the support leg being connected to the support and having a first side and a second side facing away from the first side; a lower damping cushion disposed between the support and the first side; an upper damping cushion disposed at the second side; and a third fastener configured to clamp the support, the lower damping cushion, the support leg, and the upper damping cushion.

In some embodiments of the present disclosure, the third fastener comprises a thread rod and a third nut. The thread rod is disposed at the support and penetrates the lower damping cushion, the support leg, and the upper damping cushion. The third nut is screwed to the thread rod.

Alternatively, the fastener comprises a third bolt and a third nut. The third bolt has a head abutted with the support and a thread rod penetrating the support, the lower damping cushion, the support leg, and the upper damping cushion. The third nut is screwed to the thread rod.

In some embodiments of the present disclosure, the motor mounting structure further comprises: a damping sleeve arranged around the thread rod and penetrating the support leg and the upper damping cushion.

In some embodiments of the present disclosure, the damping sleeve is disposed at the lower damping cushion.

In some embodiments of the present disclosure, the damping sleeve and the lower damping cushion are integrally formed.

In some embodiments of the present disclosure, the thread rod has a threaded segment and an unthreaded rod segment. The third nut is screwed to the threaded segment.

In some embodiments of the present disclosure, an intersection between the threaded segment and the unthreaded rod segment is flush with an end surface of the damping sleeve; and/or, the upper damping cushion has an upper surface at a side of the upper damping cushion close to the third nut. The upper surface is flush with the end surface of the damping sleeve.

In some embodiments of the present disclosure, at least two third fasteners are provided, the at least two third fasteners being spaced apart from each other in a length direction of the lower damping cushion.

The present disclosure also relates to an air conditioner indoor unit comprising the above-described coupler.

The present disclosure also relates to an air conditioner comprising the above-described air conditioner indoor unit.

### BRIEF DESCRIPTION OF THE DRAWINGS

To more clearly illustrate embodiments of the present disclosure or technical solutions in the related art, accompanying drawings required to be used in the description of the embodiments or in the related art are briefly described below. Obviously, the accompanying drawings in the following descriptions are only some embodiments of the present disclosure. For those skilled in the art, other designs can be obtained from structures illustrated in these accompanying drawings without creative labor.
FIG. 1 is a schematic view of a motor according to some embodiments of the present disclosure.
FIG. 2 is a schematic view of a motor according to some embodiments of the present disclosure.
FIG. 3 is an enlarged view of a region indicated by a dashed line in FIG. 2.
FIG. 4 is a schematic view of a motor according to some embodiments of the present disclosure.
FIG. 5 is an enlarged view of a region indicated by a dashed line in FIG. 4.
FIG. 6 is an exploded partial view of a motor according to some embodiments of the present disclosure.
FIG. 7 is a schematic view of a resilient member according to some embodiments of the present disclosure.
FIG. 8 is a schematic view of a fastening ring according to some embodiments of the present disclosure.
FIG. 9 is a schematic view of mounting of a motor by a first support portion according to some embodiments of the present disclosure.
FIG. 10 is a schematic view of mounting of a motor by a second support portion according to some embodiments of the present disclosure.
FIG. 11 is a schematic view of mounting of a motor by a second support portion according to some embodiments of the present disclosure.
FIG. 12 is an enlarged view of a region indicated by a dashed line in FIG. 11.
FIG. 13 is a schematic view of mounting of a motor at a support according to some embodiments of the present disclosure.
FIG. 14 is an exploded view of a structure illustrated in FIG. 13.
FIG. 15 is an enlarged view of a region indicated by a dashed line in FIG. 14.
FIG. 16 is a schematic structural view of a third bolt according to some embodiments of the present disclosure.

Description of reference numerals of the accompanying drawings:
motor 1000; enclosing plate 1100; circumferential surface 1110; cover 1200; end surface 1210; rotation shaft 1300; motor body 1400;
first support portion 2100; protrusion 2110;
second support portion 2200; clamping slot 2210; clamping slot cavity 2211; clamping slot opening 2212;
resilient member 3100; shaft hole 3110; first groove 3120; recess 3130;
fastening ring 3200; opening 3210; second groove 3220;
fixation plate 3300; shaft hole 3310;
first fastener 3400;
second fastener 3500; second bolt 3510; head 3511; rod 3512; second nut 3520;
binding strap 3600;
support leg 3700; first side 3710; second side 3720;
support 4000;
lower damping cushion 5000; damping sleeve 5100;
upper damping cushion 6000;
third fastener 7000; third bolt 7100; head 7110; thread rod 7120; threaded segment 7121; unthreaded rod segment 7122; third nut 7200; elastic piece 7310; elastic cushion 7320.

Implementations of the objects, functional features, and advantages of the present disclosure will be further described in conjunction with the embodiments and with reference to the accompanying drawings.

### DETAILED DESCRIPTION OF THE EMBODIMENTS

Technical solutions according to embodiments of the present disclosure will be described clearly and completely below in combination with accompanying drawings of the embodiments of the present disclosure. Obviously, the embodiments described below are only a part of the embodiments of the present disclosure, rather than all embodiments of the present disclosure. On a basis of the embodiments of the present disclosure, all other embodiments obtained by those skilled in the art without creative labor shall fall within the protection scope of the present disclosure.

It should be noted that all directional indications (such as up, down, left, right, front, rear, etc.) in the embodiments of the present disclosure are only used to explain relative positions between various components, movements of various components, or the like under a predetermined posture (as illustrated in the figures). When the predetermined posture changes, the directional indications also change accordingly.

In the present disclosure, unless otherwise clearly specified and limited, terms, such as "connect", "fix" or the like, should be understood in a broad sense. For example, it may be a fixed connection or a detachable connection or connection as one piece; mechanical connection or electrical connection; direct connection or indirect connection through an intermediate; internal communication of two components or the interaction relationship between two components, unless otherwise clearly limited. For those skilled in the art, specific meanings of the above-mentioned terms in the present disclosure can be understood according to specific circumstances.

In addition, descriptions, such as "first" "second" or the like, in the present disclosure are only used for descriptive purposes, and cannot be understood as indicating or implying relative importance or implicitly indicating the number of indicated technical features. Therefore, the features associated with "first" and "second" may explicitly or implicitly comprise at least one of the features. In addition, combinations can be performed on the technical solutions according to various embodiments of the present disclosure, but these combinations must be based on the fact that they can be realized by those skilled in the art. When a combination of the technical solutions is contradictory or unattainable, the combination of the technical solutions neither exists nor falls within the protection scope of the appended claims of the present disclosure.

The present disclosure provides a motor mounting structure. The motor mounting structure comprises a motor 1000, a first support portion 2100, and a second support portion 2200, and will be described below with reference to an air conditioner indoor unit as an example. In other embodiments of the present disclosure, the motor mounting structure according to the present disclosure is not limited to be used in the air conditioner indoor unit.

The motor 1000 is an apparatus for outputting power. Taking the air conditioner indoor unit as an example, a fan wheel and an evaporator are disposed in the air conditioner indoor unit. The motor 1000 has a rotation shaft 1300, which can output a rotational power. The motor 1000 is drivingly connected with the fan wheel by the rotation shaft 1300 to drive the fan wheel to rotate. In this way, the fan wheel is caused to drive air to flow. The air passes through the evaporator to perform a heat exchange to reduce a temperature.

Due to different needs in various regions, air conditioner indoor units are designed in different forms to meet these needs. Accordingly, an internal structure of the product changes. To reduce a cost, most of the air conditioner indoor units of different forms share parts. Therefore, how to ensure versatility of parts becomes the key, especially for high-cost parts like the motor 1000. When a motor mounting structure is designed for one form of air conditioner indoor unit, versatility and flexibility of the motor 1000 can be greatly reduced. When needs for different forms of products change due to market factors, manufacturing of the whole product cannot be quickly adjusted. Therefore, in this embodiment, two kinds of mounting structures, namely, the first support portion 2100 and the second support portion 2200, are designed on the motor 1000. In this way, the flexibility and the versatility of mounting the motor 1000 can be improved.

In an exemplary embodiment of the present disclosure, the motor 1000 is provided with the first support portion 2100 and the second support portion 2200. Both the first support portion 2100 and the second support portion 2200 are configured to be fixed. That is, the motor 1000 can be fixed and mounted as a whole by the first support portion 2100, or by the second support portion. A difference between the first support portion 2100 and the second support portion 2200 may be that a structure between the first support portion 2100 and the second support portion 2200 is different, and/or a position between the first support portion 2100 and the second support portion 2200 is different, and/or a fixed mounting method between the first support portion 2100 and the second support portion 2200 is different. The first support portion 2100 and the second support portion 2200 different from each other realize two different mounting methods of the motor 1000.

When applied to a specific air conditioner indoor unit, a same motor 1000 has two kinds of mounting structures, that is, the first support portion 2100 and the second support portion 2200. Corresponding mounting structures are selected based on an actual product applied. For example, for a first form of air conditioner indoor unit, the motor 1000 is fixed and mounted using the first support portion 2100. For a second form of air conditioner indoor unit, the motor 1000 is fixed and mounted using the second support portion 2200. Since the first support portion 2100 and the second support portion 2200 are disposed in the same motor 1000, the motor 1000 of this type can be applied to each of the first form of air conditioner indoor unit and the second form of air conditioner indoor unit. In this way, a motor having the first support portion 2100 and the second support portion 2200 can be produced in large quantities. The motor 1000 can be flexibly configured and used when demands for the first form of air conditioner indoor unit and the second form of air conditioner indoor unit change, without designing the motor 1000 for each of the first form of air conditioner indoor unit and the second form of air conditioner indoor unit, which can improve the versatility of the motor 1000 and reduce difficulty of manufacturing and configuring.

From the above, it can be seen that by disposing the first support portion 2100 and the second support portion 2200 at the motor 1000, and the first support portion 2100 being different from the second support portion 2200, two mounting methods of the motor 1000 are realized. When applied to the specific air conditioner indoor unit, a suitable mounting method can be selected based on a form of the air conditioner indoor unit, greatly improving the versatility of the motor 1000 and reducing the cost.

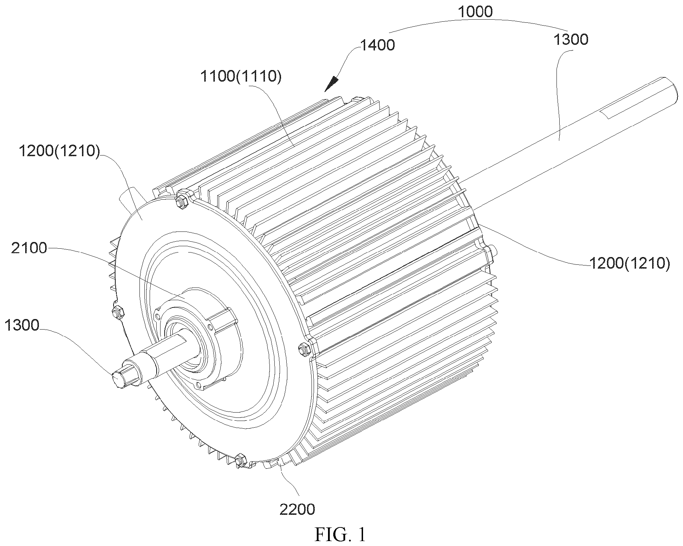

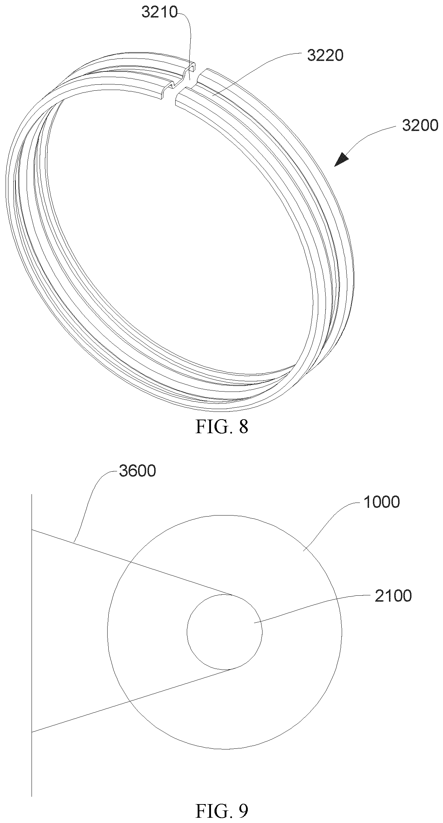

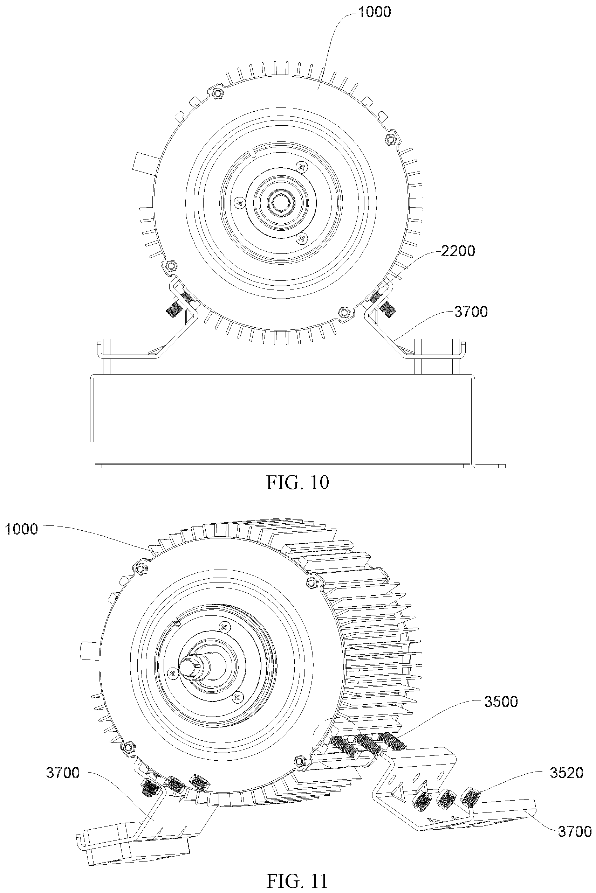

As illustrated in FIG. 1 to FIG. 3 and FIG. 9 to FIG. 12, in some embodiments of the present disclosure, the motor 1000 comprises the rotation shaft 1300 and a motor body 1400. The rotation shaft 1300 penetrates the motor body 1400 to be in connection with the motor body 1400 in a driven manner. For example, the motor body 1400 has a corresponding rotor. The rotor is connected to the rotation shaft 1300 to drive the rotation shaft 1300 to rotate. The rotation shaft 1300 rotates to output the rotational power.

The motor body 1400 has a circumferential surface 1110 and an end surface 1210. For example, the motor body 1400 has a cylindrical shape. In this way, the end surface 1210 is formed at each of two ends of the motor body 1400. The circumferential surface 1110 is formed between the end surfaces 1210 at two ends of the motor body 1400. The rotation shaft 1300 as a whole penetrates the motor body 1400 to allow the rotation shaft 1300 to be surrounded by the circumferential surface 1110. In addition, the rotation shaft 1300 has an end extending beyond the end surface 1210 at one of two ends of the motor body 1400, and another end extending beyond the end surface 1210 at another one of two ends of the motor body 1400. In this way, one end of the rotation shaft 1300 can be connected to the fan wheel, and the other end of the rotation shaft 1300 can also be connected to the fan wheel.

The first support portion 2100 is disposed at the end surface 1210 of the motor body 1400, and the second support portion 2200 is disposed at the circumferential surface 1110 of the motor body 1400. The first support portion 2100 and the second support portion 2200 are located at different positions of the motor 1000, so as to adapt to different space requirements.

In an exemplary embodiment of the present disclosure, the first support portion 2100 is disposed at the end surface 1210 of the motor body 1400, in such a manner that the first support portions 2100 located at two ends of the motor body 1400 are spaced apart from each other in an axial direction of the motor body 1400, and the motor 1000 can be fixed only by fixing the first support portions 2100 located at two ends of the motor body 1400. Since the first support portions 2100 located at two ends of the motor body 1400 need to be fixed, the first support portion 2100 can have a smaller size. For example, the first support portion 2100 protrudes to a small extent with respect to the end surface 1210. Therefore, a binding strap 3600 can be used to wind around the first support portion 2100, allowing the whole motor 1000 to be suspended for mounting, which is suitable for use when a space is narrow, without occupying too much space under the product, and a circumferential space of the motor 1000.

The second support portion 2200 is disposed at the circumferential surface 1110 of the motor body 1400. Since the motor body 1400 has a predetermined length (an axial length), the second support portion 2200 can extend in the axial direction of the motor body 1400 to effectively support the motor body 1400. Due to the second support portion 2200 being disposed at the circumferential surface 1110, the motor 1000 can be supported at a bottom of the air conditioner indoor unit by the second support portion 2200. In this way, a bottom space of the air conditioner indoor unit is occupied, which is suitable for those products having insufficient upper space position, and an axial space of the motor 1000 cannot be occupied.

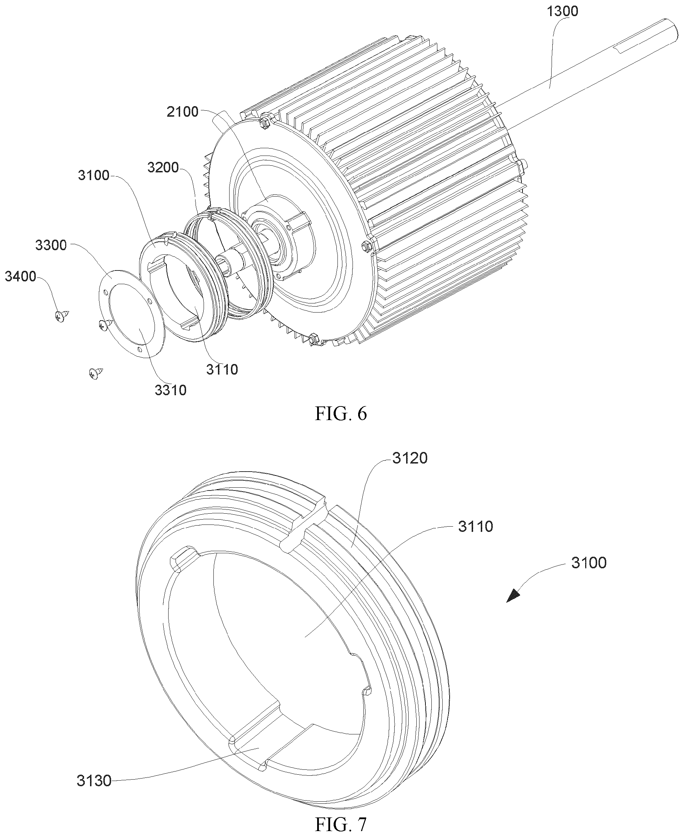

In another exemplary embodiment of the present disclosure, as illustrated in FIG. 6, in some embodiments, to make a support effect of the motor 1000 better and operation of the motor 1000 more stable, the first support portion 2100 is designed as an annular shape and the rotation shaft 1300 is surrounded by the first support portion 2100. That is, the first support portion 2100 has a corresponding shaft hole, in such a manner that when the rotation shaft 1300 penetrates the motor body 1400, the rotation shaft 1300 extends through the shaft hole of the first support portion 2100.

The motor body 1400 needs to drive the rotation shaft 1300 to rotate. Generally speaking, the rotation shaft 1300 is disposed at a center of the motor body 1400, enabling the operation of the motor 1000 to more stable. Since the rotation shaft 1300 is in connection with the fan wheel in a driving manner, the motor 1000 has a quite large load. Therefore, to avoid large swinging of the rotation shaft 1300 during rotation when the first support portion 2100 is fixed, the rotation shaft 1300 is surrounded by the first support portion 2100. That is, the first support portion 2100 is also located at the center of the motor body 1400. When the first support portion 2100 is fixed, the motor body 1400 does not swing due to relative offset between the center of gravity and the first support portion 2100, allowing the operation of the motor 1000 to more stable.

Further, since the first support portion 2100 is designed as the annular shape, the first support portion 2100 can be provided to support a bearing. When the bearing is disposed on the first support portion 2100, the rotation shaft 1300 penetrates the bearing when penetrating the motor body 1400. Therefore, the rotation shaft 1300 is supported and the bearing is mounted.

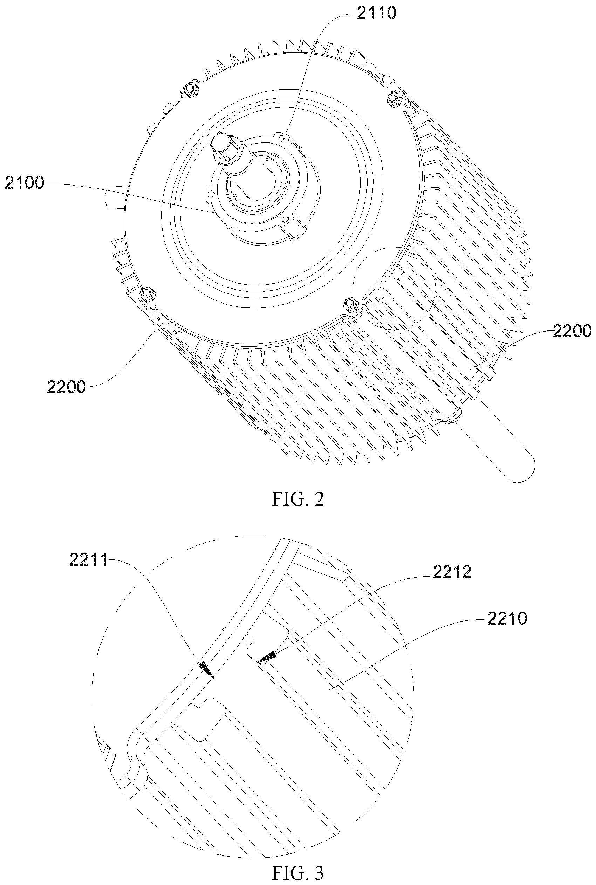

As illustrated in FIG. 1 and FIG. 2, in some embodiments of the present disclosure, the motor body 1400 comprises a cover 1200 having the end surface 1210. The cover 1200 and the first support portion 2100 are integrally formed, improving structural strength of the first support portion 2100 and reducing manufacturing difficulty.

In an exemplary embodiment of the present disclosure, the motor body 1400 comprises a housing constituting an outermost structure of the motor body 1400. The housing comprises the cover 1200 and an enclosing plate 1100. The enclosing plate 1100 is formed in a cylindrical shape as a whole. Each of two ends of the enclosing plate 1100 is covered by the cover 1200. In this way, a structure having a cavity is formed, in which components such as the rotor and a stator can be placed. When the cover 1200 is prepared, the first support portion 2100 is integrally formed with the cover 1200. The first support portion 2100 has an axial protruding shape with respect to the cover 1200. In this way, the first support portion 2100 is incorporated into the cover 1200, improving the structural strength of the first support portion 2100. Especially when the motor 1000 is suspended and mounted based on the first support portion 2100, the first support portion 2100 can be prevented from breaking with respect to the motor body 1400. Since the rotation shaft 1300 needs to penetrate the first support portion 2100, it is necessary to ensure matching accuracy between the first support portion 2100 and the rotation shaft 1300. By forming the first support portion 2100 and the cover 1200 as one piece, the matching accuracy between the first support portion 2100 and the rotation shaft 1300 can be ensured to a maximum extent, avoiding a problem of poor matching accuracy caused when the cover 1200 and the first support portion 2100 are separately arranged.

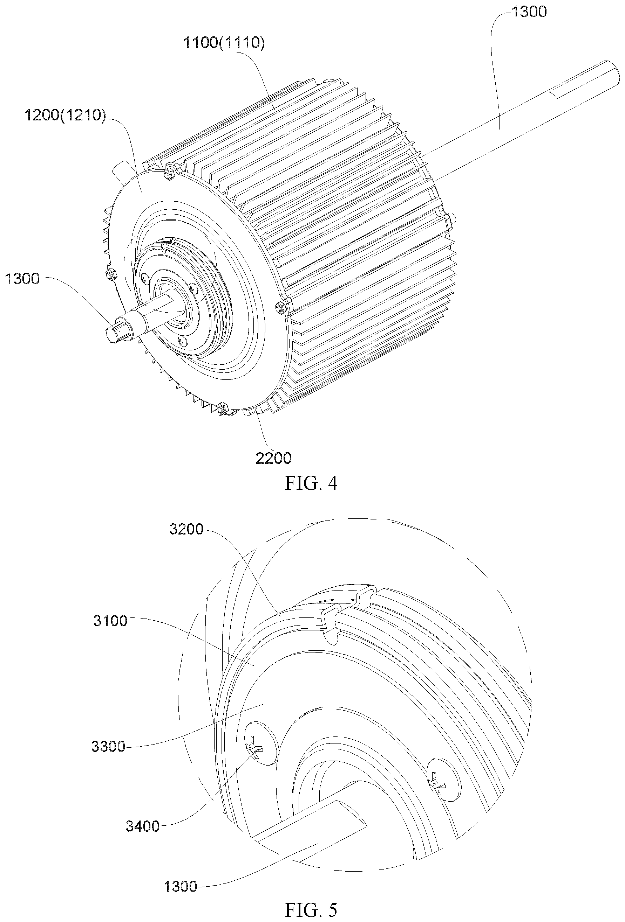

In another exemplary embodiment of the present disclosure, as illustrated in FIG. 4 to FIG. 8, in some embodiments, the first support portion 2100 is configured for mounting of a resilient member 3100. In an exemplary embodiment of the present disclosure, vibration may occur during the operation of the motor 1000, to reduce such vibration and reduce occurrence of noise, the resilient member 3100 is provided. The resilient member 3100 is an elastically deformable member. For example, the resilient member 3100 is made of rubber. The resilient member 3100 has an annular shape as a whole, which can be arranged around the first support portion 2100 to surround the first support portion 2100. In this way, when the motor 1000 needs to be mounted by the first support portion 2100, the binding strap 3600 can wind around the resilient member 3100 to realize fixation and mounting of the motor 1000, in such a manner that the resilient member 3100 can slow down transmission of vibration and avoid the occurrence of noise.

In addition, since the resilient member 3100 has predetermined elasticity, to avoid excessive deformation of the resilient member 3100 when the first support portion 2100 is fixed, a fastening ring 3200 is disposed at an outer circumference of the resilient member 3100. Strength of the fastening ring 3200 is larger than that of the resilient member 3100. The fastening ring 3200 is fastened at the outer circumference of the resilient member 3100 around the resilient member 3100. In this way, when the binding strap 3600 needs to be used to wind around the resilient member 3100, the fastening ring 3200 disposed between the binding strap 3600 and the resilient member 3100 can avoid the resilient member 3100 from offsetting from the first support portion 2100 due to excessive deformation of the resilient member 3100. Therefore, a satisfactory fixation effect can be realized.

In another exemplary embodiment of the present disclosure, in combination with FIG. 1, to further ensure a relative position between the resilient member 3100 and the fastening ring 3200, the resilient member 3100 has a first groove 3120 along the outer circumference of the resilient member 3100, and the fastening ring 3200 has a second groove 3220 in an extension direction of the fastening ring 3220. The second groove 3220 protrudes towards the resilient member 3100, in such a manner that the second groove 3220 can be embedded in the first groove 3120 as a whole. When the fastening ring 3200 is stressed, for example, winded by the binding strap 3600, the fastening ring 3200 and the resilient member 3100 can be mutually constrained to avoid separation, ensuring the fixing effect on the motor 1000.

In another exemplary embodiment of the present disclosure, as illustrated in FIG. 5 to FIG. 8, in some embodiments, the fastening ring 3200 has an opening 3210 in a circumferential direction of the fastening ring 3200, forming a non-enclosed annular shape. In this way, it is more convenient to fix the fastening ring 3200 around the outer circumference of the resilient member 3100. In an exemplary embodiment of the present disclosure, since the fastening ring 3200 has the opening 3210, the fastening ring 3200 can be spread apart at the opening 3210 by a predetermined distance and then arranged around the outer circumference of the resilient member 3100. For example, the fastening ring 3200 can be made of metallic material. When the fastening ring 3200 is spread apart at the opening 3210 by the predetermined distance and then arranged around the outer circumference of the resilient member 3100, the fastening ring 3200 can return to an original shape to be engaged into the outer circumference of the resilient member 3100.

As illustrated in FIG. 2, FIG. 6, and FIG. 7, in some embodiments of the present disclosure, to prevent the resilient member 3100 from rotating relative to the first support portion 2100, one of the first support portion 2100 and the resilient member 3100 is provided with a protrusion 2110 and another one of the first support portion 2100 and the resilient member 3100 has a recess 3130. The protrusion 2110 and the recess 3130 cooperate with each other.

In an exemplary embodiment of the present disclosure, the motor body 1400 needs to drive the rotation shaft 1300 to rotate. Since the resilient member 3100 and the fastening ring 3200 are disposed between the binding strap 3600 and the first support portion 2100 when the first support portion 2100 is fixed, for example, when the binding strap 3600 is fixed, the protrusion 2110 and the recess 3130 cooperate with each other to avoid relative deflection between the resilient member 3100 and the first support portion 2100 when the rotation shaft 1300 rotates. For example, as an example, the resilient member 3100 has the recess 3130 and the first support portion 2100 has the protrusion 2110. The resilient member 3100 has three recesses 3130 in a circumferential direction at the shaft hole 3110 thereof. The first support portion 2100 also has three protrusions 2110 in a circumferential direction thereof. When the resilient member 3100 is arranged around the first supporting portion 2100, the protrusion 2110 is inserted into the recess 3130 to prevent the resilient member 3100 from rotating relative to the first support portion 2100.

In another exemplary embodiment of the present disclosure, to facilitate the resilient member 3100 being arranged around the first support portion 2100, as illustrated in FIG. 5 and FIG. 6, in some embodiments of the present disclosure, the motor mounting structure further comprises a first fastener 3400 and a fixation plate 3300. Thus, when the resilient member 3100 is arranged around the first support portion 2100, the first fastener 3400 penetrates the fixation plate 3300 and connected to the first support portion 2100, in such a manner that the fixation plate 3300 can be abutted with the resilient member 3100 at an outside, preventing the resilient member 3100 from being separated from the first support portion 2100.

In an exemplary embodiment of the present disclosure, the resilient member 3100 has the shaft hole 3110, by which the resilient member 3100 is arranged around the first support portion 2100. The fixation plate 3300 also has a shaft hole 3310. The shaft hole 3310 of the fixation plate 3300 and the shaft hole 3110 of the resilient member 3100 are opposite to each other to allow the rotation shaft 1300 to penetrate. The fixation plate 3300 extends in a radial direction of the shaft hole 3310 and facing away from the shaft hole 3310 to be abutted with the resilient member 3100. The first fastener 3400 penetrates the fixation plate 3300 and connected to the first support portion 2100. For example, the first fastener 3400 may be connected to the protrusion 2110 of the first support portion 2100, providing a larger space for the first fastener 3400 to be connected. For example, the first fastener 3400 is a threaded fastener.

The second fixing method of the motor 1000 will be described below. As illustrated in FIG. 2, in some embodiments of the present disclosure, to make fixing of the motor 1000 more stable, the second support portion 2200 is disposed at each of two sides of the rotation shaft 1300. For example, the second support portions 2200 at two sides are symmetrical with respect to a symmetry plane formed in a direction from the rotation shaft 1300 to the circumferential surface 1110 of the motor body 1400, realizing effective fixing of the motor 1000.

In another exemplary embodiment of the present disclosure, the second support portion 2200 may be arranged at intervals in the axial direction of the motor body 1400. A plurality of second support portions 2200 are provided, in such a manner that corresponding second support portions 2200 can be selected based on an actual product. For example, when the motor 1000 is mounted to a bottom of the product, for example, when the motor 1000 is fixed by a support leg 3700, the support leg 3700 can have a smaller size to avoid occupying an excessive space. In addition, the second support portion 2200 may extend in the axial direction of the motor 1000. The axial direction is consistent with an extension direction of the rotation shaft 1300, in such a manner that the motor body 1400 can be effectively supported in the axial direction.

In another exemplary embodiment of the present disclosure, as illustrated in FIG. 3, FIG. 11, and FIG. 12, in some embodiments, the second support portion 2200 comprises a clamping slot 2210 configured for fixing of the support leg 3700 by the second fastener 3500.

In a further embodiment, the motor body 1400 comprises the enclosing plate 1100 defining the circumferential surface 1110. The enclosing plate 1100 has the clamping slot 2210 at the circumferential surface 1110. The clamping slot 2210 has a clamping slot cavity 2211 and a clamping slot opening 2212 smaller than the clamping slot cavity 2211. The second fastener 3500 comprises a second nut 3520 and a second bolt 3510 having a head 3511 and a rod 3512. The head 3511 of the second bolt 3510 is engaged into the clamping slot cavity 2211 and extends out of the clamping slot opening 2212. The support leg 3700 has a fixation hole, through which the rod 3512 of the second bolt 3510 passes. The second nut 3520 is screwed to the rod 3512 to fasten the support leg 3700, realizing the fixing and the mounting of the motor 1000.

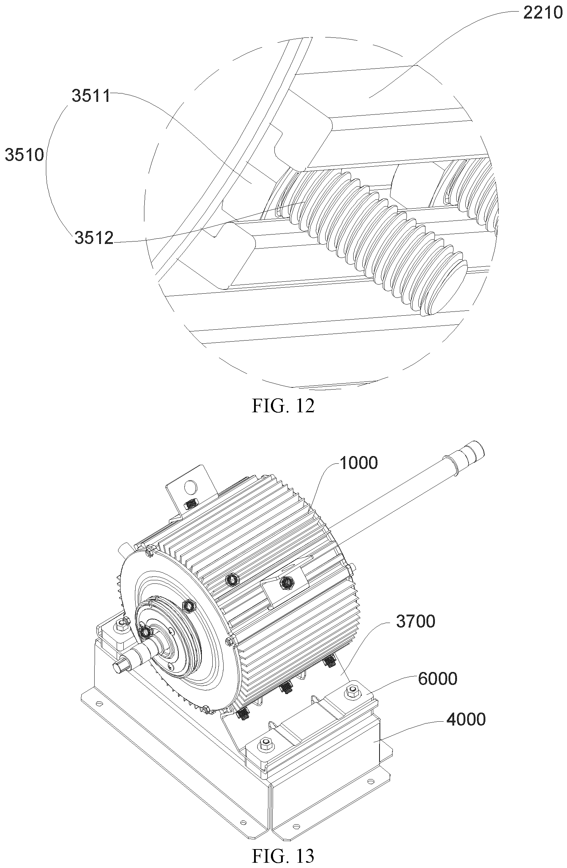

As illustrated in FIG. 13 to FIG. 15, in some embodiments of the present disclosure, the motor mounting structure comprises a support 4000, a lower damping cushion 5000, an upper damping cushion 6000, and a third fastener 7000.

In an exemplary embodiment of the present disclosure, the support 4000 is equivalent to a fixed base for supporting a weight of the motor 1000. Generally, the air conditioner indoor unit has a corresponding bottom structure. For example, a frame is formed at a bottom of the air conditioner indoor unit. The support 4000 is fixed to the frame. Since the motor 1000 has a large weight, the frame structure of the bottom of the air conditioner indoor unit can effectively support the motor 1000. There are many ways to connect the support 4000 to the bottom of the air conditioner indoor unit. For example, a most common way is to fix the support 4000 to the bottom of the air conditioner indoor unit by way of threaded connection, so as to realize mounting of the support 4000. It should be understood that the support 4000 may constitute a partial structure of the bottom of the air conditioner indoor unit. For example, when the bottom of the air conditioner indoor unit is the frame structure, which may be regarded as the support 4000, an entire mounting structure can be made more concise.

To realize connection between the motor 1000 and the support 4000, the following method can be adopted. The support leg 3700 is disposed at the motor 1000 (reference can be made to the above for the scheme of disposing the support leg 3700 at the motor 1000). The motor 1000 is connected to the support 4000 by the support leg 3700. For example, two support legs 3700 are provided at two sides of a central shaft of the motor 1000, respectively. The support leg 3700 extends in the axial direction of the motor 1000, in such a manner that when the support leg 3700 is fixed, the motor 1000 can be effectively supported in the axial direction of the motor 1000.

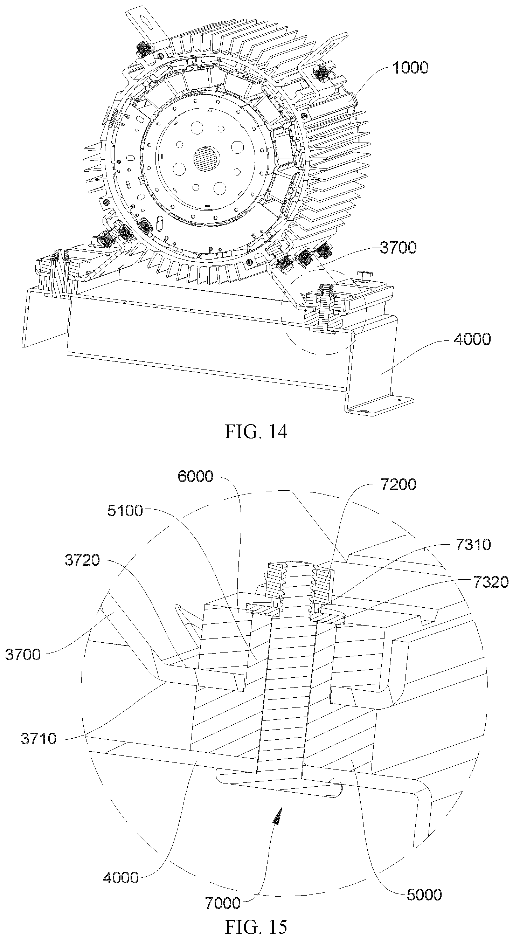

Generally speaking, to effectively support the motor 1000, the support leg 3700 is designed to have high structural strength. For example, the support leg 3700 is made of steel, enabling the motor 1000 to be effectively supported and preventing the motor 1000 from shaking. In view of this, when the support leg 3700 is mounted to the support 4000, vibration generated during the operation of the motor 1000 is transmitted to the support 4000 by the support leg 3700, forming large vibration to generate noise, and even causing vibration of an whole air conditioner indoor unit. For this reason, in this embodiment, the lower damping cushion 5000 is disposed between the support leg 3700 and the support 4000. For example, in the orientation illustrated in FIG. 15, the support leg 3700 has a first side 3710 and a second side 3720 facing away from the first side 3710. The first side 3710 is a lower surface of the support leg 3700 and the second side 3720 is an upper surface of the support leg 3700.The support leg 3700 is abutted with the lower damping cushion 5000 by the first side 3710, that is, the lower surface thereof. When the vibration generated during the operation of the motor 1000 is transmitted to the lower damping cushion 5000 by the support leg 3700, the lower damping cushion 5000 can act as a buffer and dissipate an energy of the vibration, avoiding vibration of the air conditioner indoor unit caused by the vibration being transmitted to the support 4000. It should be understood that the lower damping cushion 5000 has a predetermined elasticity. When the vibration is transmitted to the lower damping cushion 5000, the lower damping cushion 5000 provides buffering through elastic deformation. For example, the lower damping cushion 5000 can be integrally formed of rubber. In another exemplary embodiment of the present disclosure, the first side 3710 of the support leg 3700 is formed as a plane having a predetermined size. Therefore, a contact area between the support leg 3700 and the lower damping cushion 5000 can be guaranteed, ensuring a buffering effect.

In addition, since it is necessary to realize effective fixation between the support 4000 and the support leg 3700, the third fastener 7000 needs to be disposed to clamp the support 4000 and the support leg 3700. When the third fastener 7000 is directly used to fix the support leg 3700, the lower damping cushion 5000, and the support 4000 after the lower damping cushion 5000 is disposed, a hard connection is formed between the third fastener 7000 and the support leg 3700. In this way, vibration may be transmitted from the support leg 3700 to the third fastener 7000, resulting in looseness of the third fastener 7000 and occurrence of noise, even looseness of the mounting of the motor 1000 in severe cases, which can hinder the operation of the motor 1000. Therefore, the motor mounting structure in this embodiment further comprises the upper damping cushion 6000, which is disposed at the second side 3720 of the support leg 3700, that is, the upper surface. That is, the support leg 3700 is jointly clamped by the upper damping cushion 6000 and the lower damping cushion 5000, in such a manner that the vibration of the motor 1000, transmitted by the support leg 3700, can be absorbed by the upper damping cushion 6000 and the lower damping cushion 5000 simultaneously. The vibration transmitted by the support leg 3700 can be neither transmitted to the support 4000 nor the third fastener 7000. It should be understood that, like the lower damping cushion 5000, the upper damping cushion 6000 also has a predetermined elasticity. The upper damping cushion 6000 provides buffering through elastic deformation. For example, the upper damping cushion 6000 is made of rubber in one piece.

The third fastener 7000 is a structure capable of enabling the upper damping cushion 6000, the support leg 3700, the lower damping cushion 5000, and the support 4000 to be fixed to each other. Thus, respective components are clamped, in such a manner that the upper damping cushion 6000, the lower damping cushion 5000, the support leg 3700, and the support 4000 are compressed and fixed to each other without relative displacement. The third fastener 7000 may have a plurality of structures. For example, the third fastener 7000 may be a binding structure, or a threaded fastener.

By disposing the upper damping cushion 6000 and the lower damping cushion 5000, with the lower damping cushion 5000 disposed between the support 4000 and the support leg 3700, and the upper damping cushion 6000 disposed between the third fastener 7000 and the support leg 3700, a soft connection between the support leg 3700 and each of the upper damping cushion 6000 and the lower damping cushion 5000 can be achieved. The support 4000, the support leg 3700, the lower damping cushion 5000, and the upper damping cushion 6000 are clamped by the third fastener 7000. The support 4000 and the support leg 3700 are flexibly buffered by the lower damping cushion 5000. The support leg 3700 and the third fastener 7000 are flexibly buffered by the upper damping cushion 6000. The vibration generated during the operation of the motor 1000 is transmitted to the upper damping cushion 6000 and the lower damping cushion 5000 by the support leg 3700. The upper and lower damping cushions can eliminate transmission of vibration, providing buffering and avoiding generation of noise, and thus ensuring smoother operation of the motor 1000.

In another exemplary embodiment of the present disclosure, the third fastener 7000 is the threaded fastener, comprising a nut 7200 and a thread rod 7120. Mutual fixation between the upper damping cushion 6000, the support leg 3700, the lower damping cushion 5000, and the support 4000 is realized through cooperation of the thread rod 7120 and the nut 7200.

In an exemplary embodiment of the present disclosure, the thread rod 7120 needs to be arranged on the support 4000. That is, the thread rod 7120 and the support 4000 are fixed to each other. A relative position of the thread rod 7120 and the support 4000 cannot be changed. For example, the thread rod 7120 is fixed to the support 4000 through welding, which is not limited to welding, as long as the thread rod 7120 and the support 4000 can be guaranteed to be fixed to each other. In this way, the mounting of the motor 1000 can be more facilitated. For example, the lower damping cushion 5000 having a corresponding mounting hole may be mounted firstly. The lower damping cushion 5000 is mounted to the support 4000 in alignment with the thread rod 7120, which passes through the mounting hole of the lower damping cushion 5000. Then, the support leg 3700 is mounted. The motor 1000 is configured to drive the support leg 3700 to move to allow the support leg 3700 to be abutted with the lower damping cushion 5000. The support leg 3700 has a corresponding mounting hole. The thread rod 7120 passes through the mounting hole of the support leg 3700. Then, the upper damping cushion 6000 having a corresponding mounting hole is mounted. The thread rod 7120 passes through the mounting hole of the upper damping cushion 6000. Since a position of the thread rod 7120 relative to the support 4000 is unchanged, there is no need to hold the thread rod 7120 during mounting, allowing the lower damping cushion 5000, the support leg 3700, and the upper damping cushion 6000 to be mounted faster.

It should be understood that to facilitate connection with the nut 7200, the thread rod 7120 needs to extend beyond the upper damping cushion 6000 to be connected to the nut 7200. When the nut 7200 is tightened, the nut 7200 can cooperate with the thread rod 7120 to jointly clamp the upper damping cushion 6000, the support leg 3700 and the lower damping cushion 5000, in such a manner that the upper damping cushion 6000, the support leg 3700, the lower damping cushion 5000, and the support 4000 are fixed to each other together, and relative positions between respective components cannot be changed. Cooperation between the thread rod 7120 and the nut 7200 simplifies connection between respective components and improves a mounting efficiency.

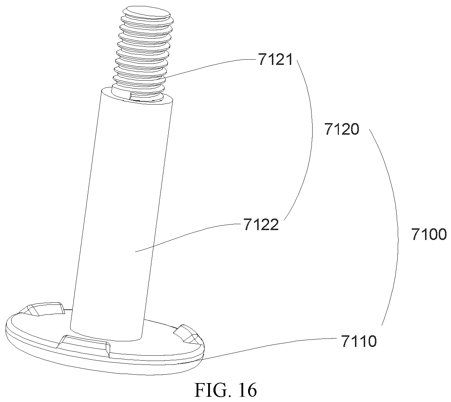

In addition, as illustrated in FIG. 15 and FIG. 16, in some embodiments of the present disclosure, the third fastener 7000 comprises the nut 7200 and a third bolt 7100. The nut 7200 and the third bolt 7100 cooperate to form a third threaded fastener 7000. The upper damping cushion 6000, the support leg 3700, the lower damping cushion 5000, the support leg 3700, and the support 4000 are fixed to each other through cooperation between the nut 7200 and the third bolt 7100. Similar to the previous embodiments, the third bolt 7100 comprises the thread rod 7120 and a head 7110. The head 7110 is disposed at an end of the thread rod 7120 to allow another end of the thread rod 7120 to sequentially penetrate the support 4000, the lower damping cushion 5000, the support leg 3700, and the upper damping cushion 6000 to clamp the components. Different from the previous embodiments, one end of the thread rod 7120 in this embodiment is provided with the head 7110 to constitute the third bolt 7100. As a commonly used part, the third bolt 7100 can be more conveniently cooperated with the nut 7200 regardless of obtaining source or a manufacturing method, in such a manner that complexity and a cost of the motor mounting structure can be reduced. It should be understood that the lower damping cushion 5000, the support leg 3700, and the upper damping cushion 6000 can be first placed at the support 4000, and the third bolt 7100 can be used to penetrate the lower damping cushion 5000, the support leg 3700, and the upper damping cushion 6000. Then, the components can be fixed by fastening of the nut 7200. Alternatively, firstly, the thread rod 7120 of the third bolt 7100 can penetrate the support 4000, and the head 7110 of the third bolt 7100 is abutted with the support 4000. In addition, the third bolt 7100 and the support 4000 can be fixed to each other through welding, in such a manner that it is more convenient for the components to be aligned with the thread rod 7120 and mounted at the support 4000.

As illustrated in FIG. 14 and FIG. 15, in some embodiments of the present disclosure, the motor mounting structure further comprises a damping sleeve 5100 having a hollow cylindrical structure. The thread rod 7120 as a whole penetrates the damping sleeve 5100. The damping sleeve 5100 surrounds an outer surface of the thread rod 7120. In this way, when the damping sleeve 5000, the support leg 3700, and the upper damping cushion 6000 are mounted, the damping sleeve 5100 is penetrated therein. That is, a soft connection between the thread rod 7120 and the support leg 3700 is realized by the damping sleeve 5100, which can prevent vibration of the motor 1000, transmitted by the support leg 3700, from reaching the thread rod 7120, avoiding loosening between the thread rod 7120 and the nut 7200 due to vibration. Therefore, stability of the motor mounting structure is further ensured.

It should be understood that when the damping sleeve 5100 is provided, a diameter of the damping sleeve 5100 is adapted to a diameter of the mounting hole of the support leg 3700. The diameter of the mounting hole of the support leg 3700 is larger than a diameter of the thread rod 7120. In the orientation illustrated in FIG. 15, a top of the thread rod 7120 extends beyond the damping sleeve 5100 so as to be exposed above the upper damping cushion 6000 to facilitate connection with the nut 7200.

In another exemplary embodiment of the present disclosure, as illustrated in FIG. 15, the damping sleeve 5100 is disposed at the lower damping cushion 5000. That is, the damping sleeve 5100 and the lower damping cushion 5000 are fixed to each other. When the lower damping cushion 5000 is mounted, the damping sleeve 5100 can be arranged around the thread rod 7120 with movement of the lower damping cushion 5000. In this way, a mounting operation is more facilitated.

The damping sleeve 5100 may be arranged around the lower damping cushion 5000 as a separately prepared component. However, by separately preparing the damping sleeve 5100, a connection step between the lower damping cushion 5000 and the damping sleeve 5100 is increased, reducing the mounting efficiency. Therefore, in some embodiments of the present disclosure, as illustrated in FIG. 15, the lower damping cushion 5000 and the damping sleeve 5100 are prepared by an integral molding process, in such a manner that the lower damping cushion 5000 and the damping sleeve 5100 may be made of a same material, such as rubber. Of course, the lower damping cushion 5000 and the damping sleeve 5100 may be made of different materials, such as being integrally formed through secondary injection molding. Integration between the lower damping cushion 5000 and the damping sleeve 5100 is stronger. Therefore, the lower damping cushion 5000 and the damping sleeve 5100 are less likely to be separated by force, so as to provide more buffering.

In another exemplary embodiment of the present disclosure, in combination with FIG. 16, in some embodiments, to ensure that the nut 7200 is screwed to the thread rod 7120 to achieve consistency of fixing each part, the thread rod 7120 is designed to comprise an unthreaded rod segment 7122 and a threaded segment 7121. The so-called threaded segment 7121 has corresponding external threads on a surface of the threaded segment 7121. A surface of the unthreaded rod segment 7122 is smooth without external threads. When the thread rod 7120 penetrates each component, the threaded segment 7121 of the thread rod 7120 extends beyond the upper damping cushion 6000, in such a manner that the nut 7200 is connected to the threaded segment 7121 to realize fastening of each component. When the nut 7200 is tightened to an intersection between the unthreaded rod segment 7122 and the threaded segment 7121, the nut 7200 cannot be tightened further, forming a limit for the nut 7200. For example, it should be understood that to effectively fix the support leg 3700, generally speaking, a plurality of (at least two) third fasteners 7000 are provided for clamping and fixing. By disposing the unthreaded rod segment 7122 and the threaded segment 7121 at the thread rod 7120, a tightening degree of the nut 7200 of each third fastener 7000 is consistent, ensuring a fixing effect of each position of the motor 1000 and ensuring that the motor 1000 is in a horizontal direction (taking horizontal placement as an example, that is, the axial direction of the motor 1000 extends in the horizontal direction).

In another exemplary embodiment of the present disclosure, as illustrated in FIG. 15, in some embodiments, an intersection between the unthreaded rod segment 7122 and the threaded segment 7121 is flush with an end surface of the damping sleeve 5100. The intersection between the unthreaded rod segment 7122 and the threaded segment 7121 is flush with an upper end surface of the damping sleeve 5100. In this way, when the nut 7200 is tightened to the intersection between the unthreaded rod segment 7122 and the threaded segment 7121, the damping sleeve 5100 can be just tightly pressed.

It is also possible that the end surface of the damping sleeve 5100 is flush with an upper surface of the upper damping cushion 6000, in such a manner that when the nut 7200 is tightened to the intersection between the unthreaded rod segment 7122 and the threaded segment 7121, the upper damping cushion 6000 can be just tightly pressed, achieving fixation between various components. It should be understood that parts such as an elastic piece 7310 and/or an elastic cushion 7320 are disposed between the nut 7200 and the damping sleeve 5100 to ensure a fastening effect of the nut 7200.

In another exemplary embodiment of the present disclosure, as illustrated in FIG. 13, in some embodiments, when at least two third fasteners 7000 are provided, these third fasteners 7000 are arranged at intervals and arranged in a length direction of the lower damping cushion 5000, which is equivalent to being arranged in a length direction of the upper damping cushion 6000. In this way, when each component is clamped, relative warping between the upper damping cushion 6000 and the lower damping cushion 5000 is not allowed.

The present disclosure further relates to an air conditioner indoor unit comprising the motor mounting structure described above. It should be understood that the motor mounting structure according to this embodiment is illustrated with reference to the above-described embodiments. Since the air conditioner indoor unit adopts the technical solution of the above-described embodiments, the air conditioner indoor unit at least has the advantageous effects brought by the technical solution of the above-described embodiments, and thus details thereof will be omitted here.

The present disclosure further relates to an air conditioner comprising the aforementioned air conditioner indoor unit. In an exemplary embodiment of the present disclosure, an air conditioner outdoor unit of the air conditioner is connected to the air conditioner indoor unit of the air conditioner to realize refrigerant circulation. The air conditioner indoor unit of this embodiment is illustrated with reference to the above-described embodiments. Since the air conditioner adopts the technical solution of the above-described embodiments, the air conditioner at least has the advantageous effects brought by the technical solution of the above-described embodiments, and thus details thereof will be omitted here.

Although some specific embodiments of the present disclosure are described above, the scope of the present disclosure is not limited to the embodiments. Under the concept of the present disclosure, any equivalent structure transformation made using the contents of the specification and the accompanying drawings of the present disclosure, or any direct or indirect application of the contents of the specification and the accompanying drawings of the present disclosure in other related fields, shall equally fall within the scope of the present disclosure.

## Claims

1. A motor mounting structure, comprising:
a motor;
a first support portion disposed at the motor and adapted to be fixed; and
a second support portion disposed at the motor and adapted to be fixed, the second support portion being different from the first support portion.

2. The motor mounting structure according to claim 1, wherein the motor comprises:
a motor body having an end surface and a circumferential surface, the first support portion being disposed at the end surface, and the second support portion being disposed at the circumferential surface; and
a rotation shaft extending beyond the end surface, the rotation shaft being surrounded by the circumferential surface.

3. The motor mounting structure according to claim 2, wherein the rotation shaft is surrounded by the first support portion.

4. The motor mounting structure according to claim 3, wherein the motor body comprises a cover having the end surface, the cover and the first support portion being integrally formed.

5. The motor mounting structure according to claim 3, wherein the first support portion is configured for mounting of a resilient member and a fastening ring, the resilient member being arranged around the first support portion, and the fastening ring being fixed around the resilient member.

6. The motor mounting structure according to claim 5, wherein one of the first support portion and the resilient member is provided with a protrusion, and another one of the first support portion and the resilient member has a recess, the protrusion being inserted into the recess to prevent the resilient member from rotating relative to the first support portion.

7. The motor mounting structure according to claim 5, further comprising:
a fixation plate abutted with the resilient member; and
a first fastener penetrating the fixation plate and connected to the first support portion.

8. The motor mounting structure according to claim 2, wherein the second support portion is disposed at each of two sides of the rotation shaft.

9. The motor mounting structure according to claim 2, wherein the second support portion extends in an axial direction of the motor body.

10. The motor mounting structure according to claim 2, wherein:
the second support portion has a clamping slot adapted to be connected to a support leg by a second fastener; and
the second fastener comprises a second bolt and a second nut, the second bolt having a head engaged into the clamping slot and a rod of the second bolt extending out of the clamping slot to penetrate the support leg, and the second nut being screwed to the rod to fasten the support leg.

11. The motor mounting structure according to claim 1, wherein:
the second support portion is connected to a support leg; and
the motor mounting structure comprises:
a support, the support leg being connected to the support and having a first side and a second side facing away from the first side;
a lower damping cushion disposed between the support and the first side;
an upper damping cushion disposed at the second side; and
a third fastener clamping the support, the lower damping cushion, the support leg, and the upper damping cushion.

12. The motor mounting structure according to claim 11, wherein:
the third fastener comprises a thread rod and a third nut, the thread rod being disposed at the support and penetrating the lower damping cushion, the support leg, and the upper damping cushion, and the third nut being screwed to the thread rod; or
the fastener comprises a third bolt and a third nut, the third bolt having a head abutted with the support and a thread rod penetrating the support, the lower damping cushion, the support leg, and the upper damping cushion, and the third nut being screwed to the thread rod.

13. The motor mounting structure according to claim 12, further comprising:
a damping sleeve arranged around the thread rod and penetrating the support leg and the upper damping cushion.

14. The motor mounting structure according to claim 13, wherein the damping sleeve is disposed at the lower damping cushion.

15. The motor mounting structure according to claim 14, wherein the damping sleeve and the lower damping cushion are integrally formed.

16. The motor mounting structure according to claim 13, wherein the thread rod has a threaded segment and an unthreaded rod segment, the third nut being screwed to the threaded segment.

17. The motor mounting structure according to claim 16, wherein:
an intersection between the threaded segment and the unthreaded rod segment is flush with an end surface of the damping sleeve; and/or
the upper damping cushion has an upper surface at a side of the upper damping cushion close to the third nut, the upper surface being flush with the end surface of the damping sleeve.

18. The motor mounting structure according to claim 16, wherein at least two third fasteners are provided, the at least two third fasteners being spaced apart from each other in a length direction of the lower damping cushion.

19. An air conditioner indoor unit, comprising a motor mounting structure according to any one of claims 1 to 18.

20. An air conditioner, comprising an air conditioner indoor unit according to claim 19.
